# FASCICULE DE BREVET EUROPEEN

(11) **EP 0 320 376 B1**
(45) Date de publication et mention de la délivrance du brevet: **31.03.1993**
(21) Numéro de dépôt: 88403100.6
(22) Date de dépôt: 07.12.1988
(51) Int. Cl.: B65C 3/06, B29C 63/18

(54) **Installation pour la mise en place de manchons d'étiquetage sur des objets tels que des bidons**
Vorrichtung zum Überziehen eines Gegenstands, wie eine Kanne, mit einem hülsenförmigen Etikett
Arrangement for applying tubular labels to objects such as cans

(30) Priorité: 10.12.1987 FR 8717242
(43) Date de publication de la demande: 14.06.1989
(73) Titulaire: PROTECTION DECORATION CONDITIONNEMENT EUROPE S.A., Montdidier (Somme) (FR)
(72) Inventeur: Vandevoorde, Jean-Claude, Montdidier Somme (FR)
(74) Mandataire: Cabinet HERRBURGER

(56) Documents cités:
- EP-A- 0 174 763
- GB-A- 2 052 436
- US-A- 4 102 728
- US-A- 4 446 616

## Description

L'invention concerne une installation pour la mise en place de manchons d'étiquetage sur des objets ou supports souples ou rigides, de forme quelconque, et notamment des bidons.

Le brevet US-A-4 446 616 décrit une installation de ce genre comprenant un transporteur rectiligne pour les bidons et dans lequel est insérée une table élévatrice propre à amener, à chaque actionnement, un bidon en position haute pour la mise en place d'un manchon à l'aide de pinces d'étirage. Une barrière est prévue sous cette table élévatrice pour maintenir en position les bidons alignés sur le transporteur pendant que la table est en position haute et pour permettre, lors de la descente de la table, la réintroduction du bidon pourvu d'un manchon dans l'alignement rectiligne des bidons.

Dans cette installation, les manchons d'étiquetage issus d'un rouleau sont présentés au-dessus du bidon et sont mis en place à la main sur ce bidon.

Vis-à-vis de ces dispositifs connus, la présente invention concerne une installation pour la mise en place de manchons d'étiquetage sur des objets tels que des bidons, cette installation comportant un bâti pourvu d'une table pour le support des bidons dans la position de mise en place des manchons, un conformateur pour la mise en forme de ces manchons, des pinces pour l'étirage des manchons conformés et leur mise en place sur les bidons, installation caractérisée en ce que le conformateur est monté sur un châssis lui-même supporté par le bâti par l'intermédiaire de moyens permettant la rotation du châssis autour d'un axe vertical, passant par l'axe de la table et par l'axe du conformateur.

Suivant un autre mode de réalisation préféré de l'invention, le conformateur est mobile verticalement sur le châssis.

Suivant un autre mode de réalisation préféré de l'invention, le conformateur du manchon est constitué par une plaque pourvue d'au moins une paire de rouleaux tournant librement sur chacune de ses faces, cette plaque étant maintenue à l'état suspendu entre des axes parallèles disposés entre les deux rouleaux de chaque paire, l'un de ces axes étant moteur, cette plaque étant pourvue, à sa base, sous la paire de rouleaux, d'un prolongement circulaire.

Suivant un autre mode de réalisation préféré de l'invention, chaque pince est montée pivotante sur la platine et est solidaire d'un bras pourvu d'une portion d'axe mobile dans la fente d'un guide de position réglable.

L'invention est représentée à titre d'exemple non limitatif sur les dessins ci-joints dans lesquels :
- la figure 1 est une vue en élévation schématique d'un mode de réalisation de l'invention ;
- la figure 2 est une vue en coupe schématique suivant A-A de la figure 1 ;
- la figure 3 est une coupe suivant B-B d'un mode de réalisation concret de l'installation ;

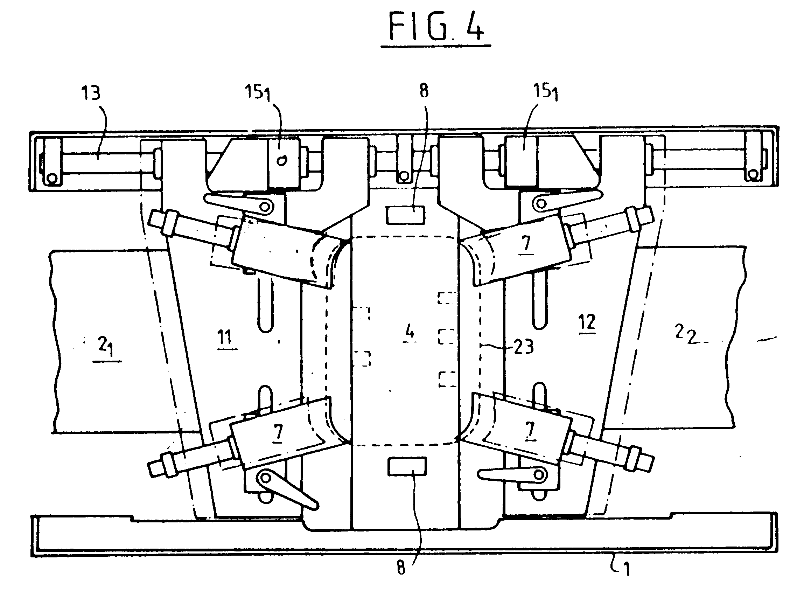

- la figure 4 est une vue de dessus de la figure 3 ;
- la figure 5 est une vue suivant la flèche V de la figure 3 ;

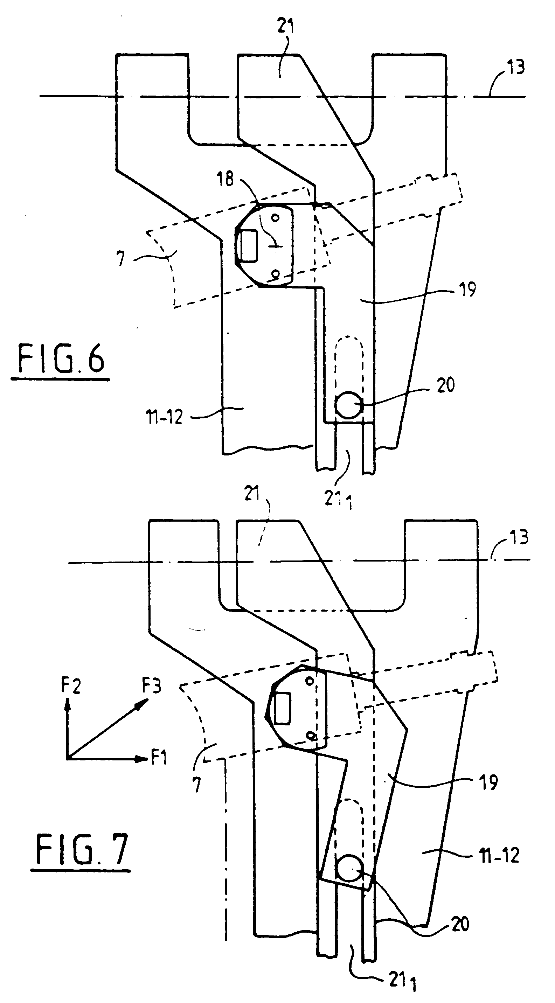

- la figure 6 est une vue du mécanisme de commande des pinces d'étirage établies suivant la flèche R de la figure 3 ;
- la figure 7 est une vue correspondant à la figure 6, les pinces étant en position d'ouverture ;

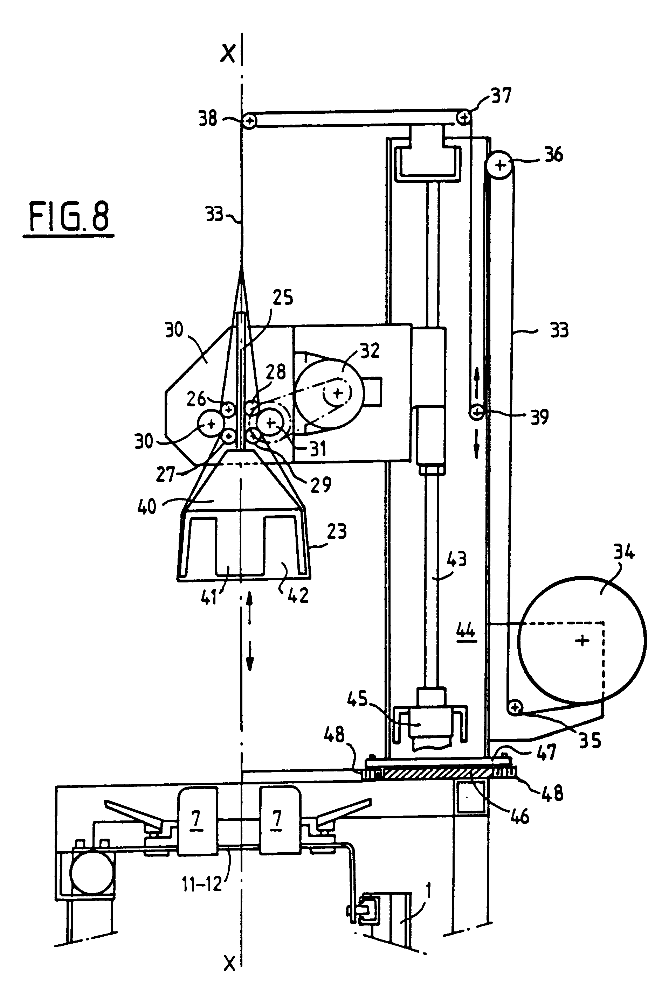

- la figure 8 est une vue en coupe suivant B-B d'un mode de réalisation de l'invention, cette vue représentant la partie haute de l'installation avec ses dispositifs d'alimentation du manchon ;
- la figure 9 est une vue de dessus de la figure 8 ;
- la figure 10 est une vue en perspective du conformateur du manchon ;

La présente invention a en conséquence pour but la réalisation d'une installation de construction simple et de fonctionnement sûr, qui permet la mise en place de manchons étirables en matière plastique permettant l'étiquetage et, éventuellement, le groupage d'objets tels que des bidons. Ces bidons se déplacent de manière rectiligne les uns à la suite des autres sur un transporteur horizontal, l'invention permettant ainsi de soulever successivement chaque bidon ou groupe de bidons à étiqueter afin de l'extraire de l'alignement de bidons puis de mettre en place le manchon d'étiquetage et de ramener ce bidon dans l'alignement.

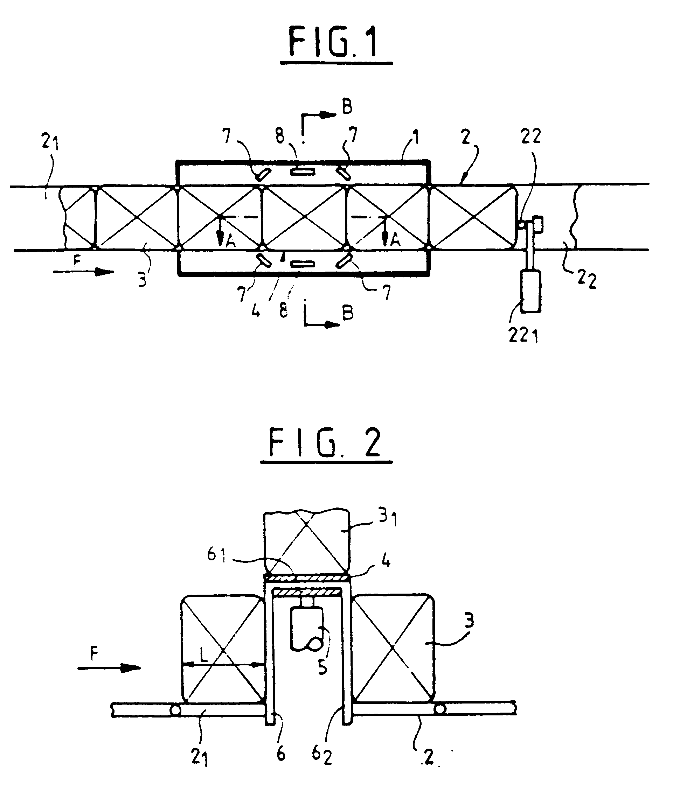

Suivant la figure 1, on a ainsi représenté une installation qui comprend un bâti 1, un transporteur horizontal et rectiligne 2, réalisé à l'aide de bandes transporteuses sans fin ou de rouleaux. Ce transporteur qui déplace les bidons 3 disposés à la suite les uns des autres dans le sens de la flèche F, comprend une partie amont 2₁ et une partie aval 2₂ séparées par une table élévatrice 4 dont le mouvement vertical est assuré par un vérin 5.

La position basse de la table 4 dans le plan du transporteur 2 correspond au mouvement d'avance de l'alignement de bidons 3 dans le sens de la flèche F alors que la position haute de la table 4 (voir figure 2) correspond à la position de mise en place d'un manchon autour du bidon 3₁ supporté par cette table 4 en position haute.

La table 4 comporte deux jeux de tiges 6 pliées à angle droit et dont les branches horizontales 6₁ sont de position réglable par coulissement dans la table 4, alors que les branches verticales 6₂ pendent sous cette table 4.

Les branches 6₁ coulissent dans le sens de la flèche F afin de permettre le réglage de l'écartement des branches verticales 6₂ des deux jeux de tiges pour qu'elles correspondent à la longueur "L" d'un bidon à étiqueter.

Les branches verticales 6₂ de ces tiges constituent donc des barrières assurant le maintien en position des bidons alignés pendant que l'un d'entre eux est soulevé par la table pour être étiqueté.

Egalement, cette disposition permet la réintroduction du bidon étiqueté dans l'alignement sans que ce dernier ou ses voisins soit basculé ou décalé de l'alignement.

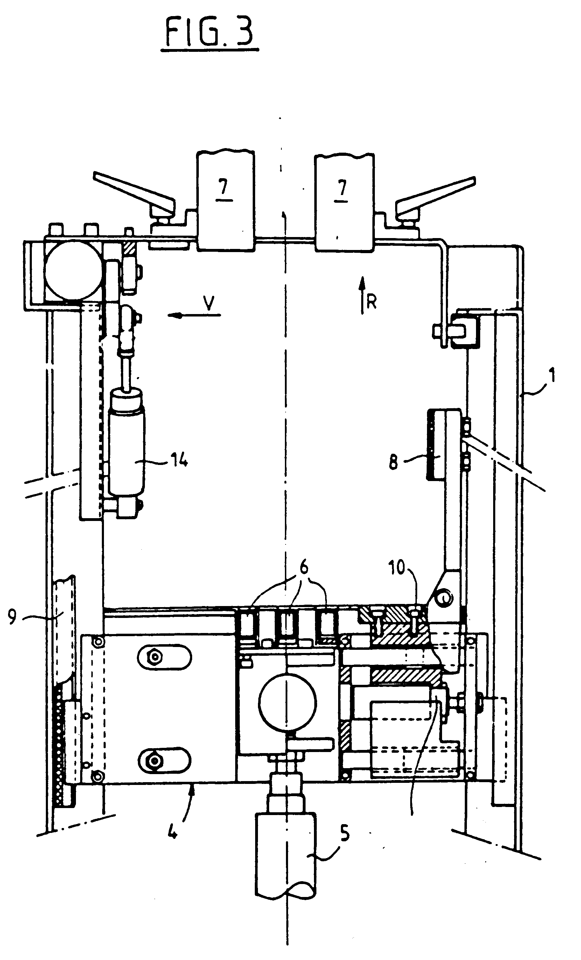

Sur la figure 3, on a également représenté de manière schématique les quatre pinces 7 autour desquelles se place manuellement ou automatiquement un manchon d'étiquetage 23, ces pinces en s'écartant l'une de l'autre assurant l'étirage du manchon en vue de sa mise en place sur le bidon 3₁ amené en position haute.

Sur cette figure, on remarque également la présence de deux bras de serrage latéraux 8 qui sont montés sur la table 4 et qui sont mobiles perpendiculairement à la flèche F afin de venir serrer le bidon avant et après la mise en place d'un manchon d'étiquetage afin d'éviter son basculement lors de ces manipulations.

La table 4 mobile verticalement sous l'action du vérin 5, est montée à coulissement latéral sur des glissières verticales 9 (voir figure 3). Sur cette figure 3, on remarque également la présence d'un des bras de serrage latéral 8, ces bras étant mobiles sous l'action d'un vérin 8₁ et étant réglables par l'intermédiaire de vis 10 afin d'adapter l'écartement et le rapprochement maximum des bras de serrage 8 à la largeur d'un bidon.

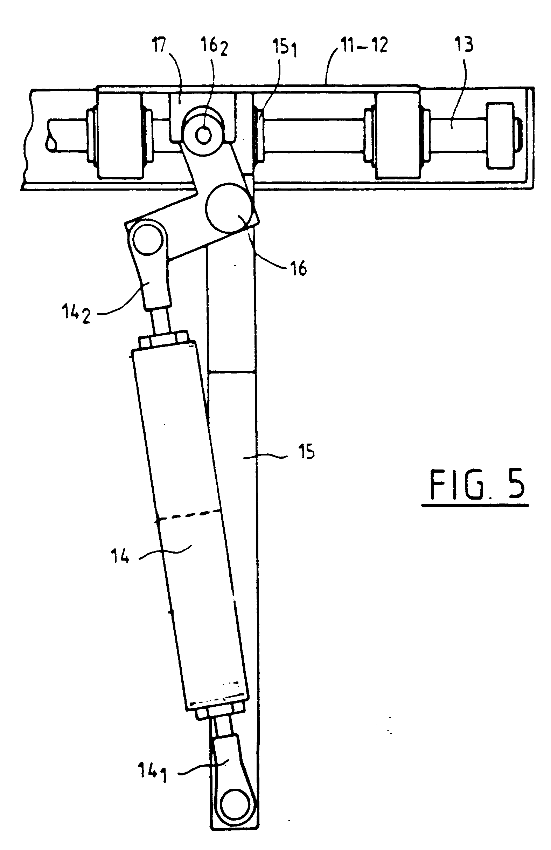

Les quatre pinces d'étirage 7 sont supportées deux à deux sur des platines 11 et 12 montées à coulissement horizontal sur un axe 13. Le déplacement de ces platines 11 et 12 est assuré par des vérins 14 (voir figures 3 et 5). Ces vérins assurent le déplacement en sens contraire des deux platines 11 et 12 afin que les deux paires de pinces 7 montées sur chaque platine, puissent être rapprochées ou écartées l'un de l'autre respectivement pour la mise en place d'un manchon sur les pinces puis pour son étirage. Chaque vérin 14 est un vérin à double effet et l'une des tiges 14₁ est reliée de manière articulée à l'extrémité inférieure d'un support 15 fixé de manière réglable en 15₁ sur l'axe 13. L'autre tige de vérin 14 est reliée de manière articulée à un bras coudé 16 qui pivote en 16₁ sur le support 15 et qui est relié par l'intermédiaire d'un galet 16₂ à une pièce 17 fixée sous l'une des platines 11 ou 12.

L'alimentation du vérin 14 permet donc de déplacer les platines 11 et 12 en sens contraire, soit pour leur écartement, soit pour leur rapprochement, cet écartement pouvant s'effectuer suivant deux amplitudes, suivant que l'une ou les deux parties des vérins doubles sont alimentées et cela afin d'obtenir deux degrés d'étirage du manchon, comme cela sera expliqué ci-après.

Les pinces d'étirage 7 sont montées pivotantes sur les platines 11 ou 12 par l'intermédiaire d'axes 18. En outre, ces pinces 7 sont fixées à l'extrémité de bras 19 pourvus d'une portion d'axe 20 mobile dans une fente 21₁ prévue sur un bras 21 fixé de manière réglable sur l'axe 13. Ainsi, lorsque les platines 11 et 12 tendent à s'écarter l'une de l'autre sous l'action du vérin 14, elles déplacement également les pinces 7 dans la même direction (flèche F1) mais étant donné que l'axe 20 est maintenu dans la fente 21₁ de la pièce fixe 21, lors de ce déplacement des platines 11 ou 12, la pièce 19 pivote autour de l'axe 21₁ afin de déplacer l'extrémité de la pince 7 dans le sens de la flèche F2 si bien que la combinaison de ces deux mouvements dans les directions F1 et F2 se traduit par un déplacement en oblique dans le sens de la flèche F3 qui tend à écarter les quatre pinces 7 l'une de l'autre. Cette disposition permet de réaliser un étirage transversal du manchon dans deux directions, afin de permettre sa mise en place aisée sur le bidon 3₁ amené en position haute.

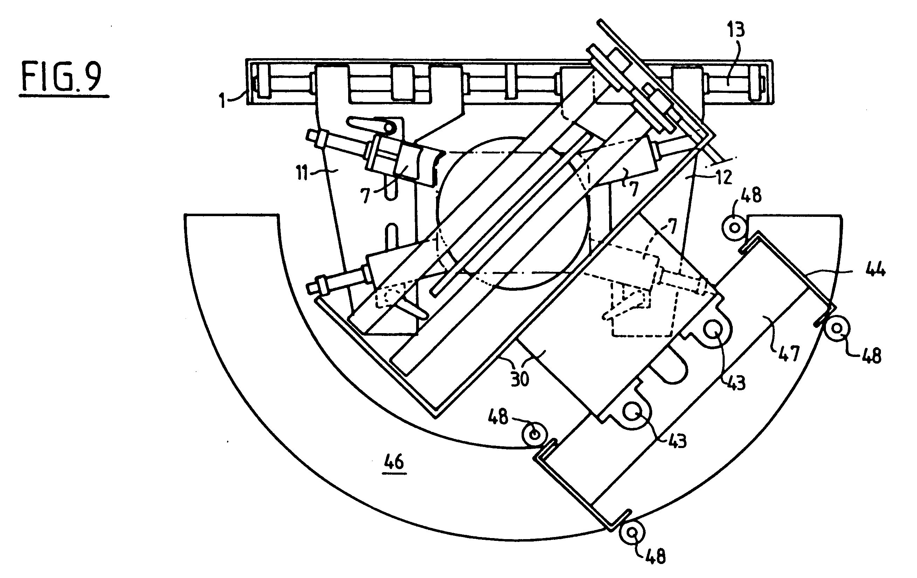

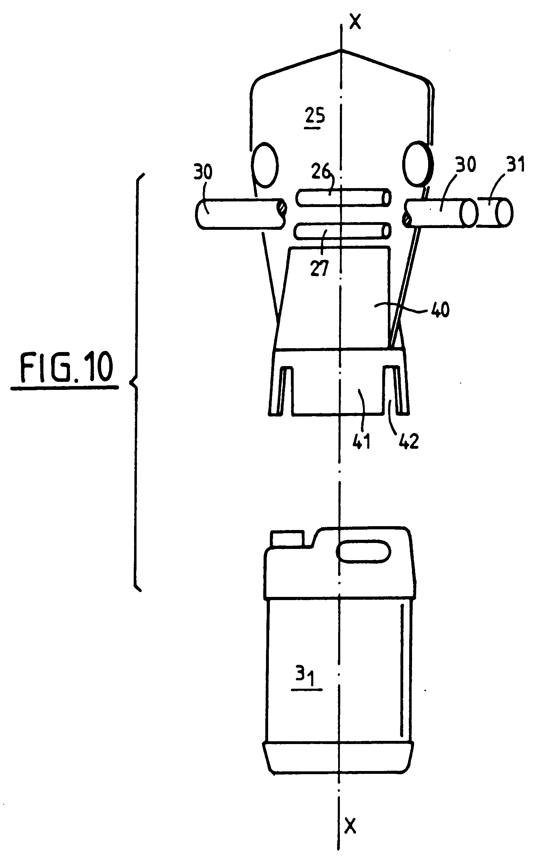

Le mécanisme représenté sur les figures 9 et 10 a trait plus particulièrement aux dispositifs assurant la conformation du manchon 23 et sa mise en place sur le bidon 3₁ placé en position haute après pincement et étirement par les pinces 7.

Ce dispositif conformateur se compose d'une plaque 25 comportant sur chacune de ses faces une paire de rouleaux 26-27 et 28-29 qui tournent librement. Ces rouleaux sont légèrement écartés l'un de l'autre et la plaque 25 est disposée entre deux axes 30 et 31 supportés par un chariot 30. Les rouleaux 26-27 et 28-29 de chaque paire sont placés en contact de l'un des axes 30 et 31 de façon que la plaque 25 soit ainsi maintenue et suspendue entre ces deux axes 30 et 31. Au moins l'un des deux axes 30 et 31 est entraîné en rotation à partir d'un moteur 32.

Le manchon 23 devant être mis en place sur un bidon provient d'un ruban de manchons prédécoupés 33 issu d'un rouleau 34. Ce ruban 33 passe sur des tambours de renvoi 35, 36, 37 et 38 ainsi que sur un tambour 39 suspendu dans une boucle de ruban afin de maintenir le ruban sous une tension uniforme. Ce ruban 33 est enfilé sur la plaque 25 du conformateur dont la largeur correspond sensiblement à la largeur à plat du manchon. Le manchon est également enfilé sur les paires de rouleaux 26-27 et 28-29, entre les axes 30 et 31, de façon que l'alimentation du moteur 32 fasse descendre le ruban de manchons 33 en le déroulant du rouleau 34.

La base de la plaque 25 comporte un prolongement 40 pourvu d'une partie inférieure 41, en forme générale de tronc de cône à base circulaire, dont la paroi latérale présente quatre ouvertures 42 dont les dimensions correspondent sensiblement à celles des pinces 7.

Lors de l'alimentation du moteur 32, le ruban 33 du manchon est ainsi entraîné sur le prolongement 40, 41 afin que le dernier manchon 23 à mettre en place sur un bidon se situe à hauteur de ce prolongement 41.

Suivant une autre version du conformateur, le ruban de manchons prédécoupés 33 est enfilé sur la plaque 25 du conformateur dont la largeur correspond sensiblement à la largeur à plat du manchon. Le manchon est également enfilé sur les paires de rouleaux caoutchoutés 26-27 et 28-29 que sont solidaires d'une section cylindrique 40 disposée dans le prolongement de la plaque 25. Les rouleaux 26-27 et 28-29 sont placés entre les deux axes 30-31 qui supportent le conformateur. L'alimentation du moteur 32 fait descendre le ruban de manchon 33, en le déroulant du rouleau 34.

Le prolongement cylindrique 40 ne présente pas, dans ce cas, d'ouverture 42. Cette disposition simplifie sensiblement la fabrication du conformateur et améliore certaines de ses caractéristiques, à savoir : meilleur guidage du ruban 33, avance plus rapide du ruban 33, suppression de la déformation et de l'usure de la partie 41.

Le chariot 30 est supporté par une colonne verticale 43 montée à coulissement sur un châssis 44 et actionné par un vérin 45. L'alimentation de ce vérin 45 permet donc d'abaisser et de soulever le chariot 30 ainsi que le manchon 23, ces mouvements du chariot étant compensés, pour le ruban 33, par le tambour tendeur 39.

Le châssis 44 du mécanisme conformateur et d'entraînement du ruban de manchon, est supporté par le châssis 1 de façon que l'axe vertical X-X passant par le milieu de la table élévatrice 4 passe également dans l'axe du prolongement 40, 41 du conformateur.

Le châssis 44 est supporté par le bâti 1 par l'intermédiaire d'une platine 46 en forme de couronne semi-circulaire sur laquelle est en appui l'embase 47 du châssis 44. Le centre de la platine demi-circulaire 46 est confondu avec l'axe X-X et le châssis 44 est monté mobile sur cette platine 46 afin qu'il soit possible de choisir la position angulaire du conformateur 25, 40, 42 par rapport à la position angulaire du bidon supporté par la table élévatrice 4 et sur lequel doit être mis en place le manchon 23.

Pour permettre le réglage de cette position angulaire, l'embase 47 est pourvue de galets de guidage 48 appliqués contre les chants en arc de cercle de la platine 46.

Cette disposition a pour but de permettre la mise en place du manchon 23 suivant une position angulaire déterminée par rapport au bidon 3₁. En effet, ces rubans de manchons sont obtenus à partir d'une bande plane qui est imprimée dans un but de décoration, de marquage ou de référencement puis cette bande imprimée est refermée sous la forme d'un tube par thermo-soudage de ses deux bords longitudinaux. Or, il est important, quelles que soient la forme et les dimensions du bidon, que la ligne de thermo-soudage soit située en un endroit précis de la périphérie du bidon, et de préférence à hauteur de l'un de ses angles afin que l'impression du manchon qui est destinée à être située sur l'une des faces du bidon, soit correctement positionnée sur cette face et non à cheval sur deux faces adjacentes.

La disposition conforme à l'invention permet donc une mise en place précise et rapide d'un manchon 23 sur un bidon sans que le ruban de manchons doive faire l'objet d'une préparation particulière en fonction de la largeur et de la longueur de ce bidon.

Le fonctionnement de ce dispositif est assuré suivant un cycle automatique par l'intermédiaire de contacteurs de fin de course constatant la fin d'un mouvement et déclenchant le mouvement suivant. Sur la figure 1 ci-jointe, on a uniquement représenté le contacteur de fin de course 22 qui est disposé sur le trajet des bidons 3 déplacés par le brin aval 2₂ du transporteur 2. La distance du contacteur de fin de course à la table 4, est réglable de façon qu'elle corresponde à un multiple de la longueur L d'un bidon 3. Dans l'exemple représenté, ce multiple est égal à 2.

Ce contacteur de fin de course 22 constitue donc une butée pour immobiliser l'alignement de bidons 3 de façon que l'un d'entre eux se trouve situé au-dessus de la table 4 lorsque ce contacteur de fin de course 22 déclenche le cycle de fonctionnement.

La première étape du cycle consiste à alimenter le vérin 45 afin de faire descendre le chariot 30 de manière que les pinces 7 soient placées à l'intérieur des ouvertures 42 du prolongement 41. Les pinces 7 sont alors actionnées afin de se serrer sur la manchon 23 et de l'étirer. Ensuite, le vérin 45 est alimenté en sens inverse et le chariot 30 est soulevé, ce qui a pour effet de séparer le manchon 23 de l'extrémité du ruban à hauteur d'une ligne de pré-découpage prévue à cet effet.

La seconde étape du cycle qui peut s'effectuer partiellement en temps masqué au cours de la première étape consiste à soulever la table 4 de l'élévateur par l'alimentation du vérin 5 tout en resserrant les bras 8 sur le bidon 3₁ afin d'éviter son basculement. A ce stade, le bidon 3₁ est placé à un premier niveau pour lequel il n'est pas encore introduit dans le manchon.

Les pinces 7 du manchon sont alors ouvertes afin de permettre au manchon étiré de tomber par gravité jusqu'à la base des pinces, dans la mesure où cette position correcte du manchon n'a pas été obtenue dès la première étape du cycle.

On notera que, dès le soulèvement de la table élévatrice 4, le contacteur de fin de course 22 qui a déclenché ces mouvements du cycle de fonctionnement, s'escamote sous l'action du vérin 22₁ afin de permettre l'évacuation du premier bidon étiqueté de l'alignement de bidons.

La troisième étape du fonctionnement consiste à actionner à nouveau les vérins 8₁ afin d'écarter les bras 8 pour permettre la mise en place ultérieure du manchon. La table élévatrice 4 poursuit son mouvement de montée et lorsque le bidon est enfilé sur le manchon étiré, les vérins 8₁ sont à nouveau actionnés pour resserrer les bras sur le bidon par l'intermédiaire du manchon précédemment mis en place. Les pinces 7 sont desserrées du manchon et la table 4 poursuit son mouvement ascendant jusqu'à ce que ces pinces 7 soient totalement dégagées du manchon.

L'étape finale consiste alors à alimenter la deuxième partie des vérins 14 afin d'écarter légèrement les pinces 7 du bidon 3₁ qui vient de recevoir le manchon, puis à alimenter le vérin 5 pour ramener la table 4 en position basse.

A la suite de ce mouvement, le bidon 3₁ pourvu de son manchon, retrouve sa place dans l'alignement rectiligne des bidons disposés sur le transporteur 2, étant donné que les barrières constituées par les tiges 6 ont maintenu en position les bidons amont et aval de l'alignement.

L'élévateur étant revenu en position basse, la butée fin de course 22 revient se placer sur le trajet des bidons du transporteur, afin de détecter le départ d'un nouveau cycle tandis que les deux parties des vérins 14 reviennent en position initiale.

## Revendications

1. Installation pour la mise en place de manchons d'étiquetage sur des objets tels que des bidons, cette installation comportant un bâti (1) pourvu d'une table (4) pour le support des bidons dans la position de mise en place des manchons, un conformateur (25, 23, 27, 30, 31) pour la mise en forme de ces manchons, des pinces (7) pour l'étirage des manchons conformés et leur mise en place sur les bidons, installation caractérisée en ce que le conformateur est monté sur un châssis (44) lui-même supporté par le bâti (1) par l'intermédiaire de moyens (46, 47, 48) permettant la rotation du châssis autour d'un axe vertical, passant par l'axe (X-X) de la table (4) et par l'axe du conformateur.

2. Installation conforme à la revendication 1, caractérisée en ce que le conformateur est mobile verticalement sur le châssis (44).

3. Installation conforme à l'une quelconque des revendications précédentes, caractérisée en ce que le conformateur du manchon est constitué par une plaque (25) pourvue d'au moins une paire de rouleaux (26, 27, 28, 29) tournant librement sur chacune de ses faces, cette plaque étant maintenue à l'état suspendu entre des axes parallèles disposés entre les deux rouleaux de chaque paire, l'un de ces axes étant moteurs, cette plaque étant pourvue, à sa base, sous la paire de rouleaux, d'un prolongement circulaire.

4. Installation conforme à la revendication 2, caractérisée en ce que le prolongement circulaire forme une partie (41) en tronc de cône à base circulaire, ce prolongement étant pourvu d'ouvertures latérales (42) pour le passage des pinces d'étirage (7) du manchon.

5. Installation conforme à la revendication 1, caractérisée en ce que les pinces d'étirage du manchon comprennent deux paires de pince montées sur des platines (11, 12) mobiles en sens contraire parallèlement à l'alignement rectiligne des bidons.

6. Installation conforme à la revendication 5, caractérisée en ce que les platines (11, 12) sont entraînées en déplacement à partir d'un vérin (14) et par l'intermédiaire d'un bras (16) pivotant sur un support (15), la position de support étant réglable pour assurer le réglage de la position des paires de pinces d'étirage.

7. Installation conforme à l'une quelconque des revendications précédentes, caractérisée en ce que chaque pince d'étirage est montée pivotante sur une platine et est solidaire d'un bras (19) relié par l'intermédiaire d'une fente (21₁) à un guide de position réglable, la position des pinces (7) étant réglable perpendiculairement à l'alignement des bidons.

8. Installation conforme à l'une quelconque des revendications précédentes, caractérisée en ce que chaque pince est montée fixe sur les platines, la position des pinces étant réglable perpendiculairement à l'alignement des bidons.

## Claims

1. Installation for placing labelling sleeves over objects such as cans, this installation comprising a frame (1) provided with a table (4) for supporting the cans in the position for placing the labels, a shaper (25, 23, 27, 30, 31) for shaping these sleeves, grippers (7) for drawing out the shaped sleeves and placing them over the cans, installation characterised in that the shaper is mounted on a framework (44) itself supported by the frame (1) by the intermediary of means(46, 47, 48) allowing the framework to rotate about a vertical axis, passing through the axis (X-X) of the table (4) and through the axis of the shaper.

2. Installation in accordance with Claim 1, characterised in that the shaper can move vertically on the framework (44).

3. Installation in accordance with any one of the preceding claims, characterised in that the shaper of the sleeve is composed of a plate (25) provided with at least one pair of rollers (26, 27, 28, 29) freely turning on each of its faces, this plate being held in the suspended state between parallel spindles arranged between the two rollers of each pair, one of these spindles being motorised, this plate being provided, at its base, under the pair of rollers, with a circular extension.

4. Installation in accordance with Claim 2, characterised in that the circular extension forms a truncated cone-shaped part (41) having a circular base, this extension being provided with lateral openings (42) for the passage of the grippers (7) for drawing out the sleeve.

5. Installation in accordance with Claim 1, characterised in that the grippers for drawing out the sleeve comprise two pairs of grippers mounted on small plates (11, 12) which can move in an opposite direction parallel to the rectilinear alignment of the cans.

6. Installation in accordance with Claim 5, characterised in that the small plates (11, 12) are driven in motion from a jack (14) and by the intermediary of an arm (16) pivoting on a support (15), the support position being adjustable to ensure the adjustment of the position of the pairs of drawing out grippers.

7. Installation in accordance with any one of the preceding claims, characterised in that each drawing out gripper is mounted pivotably on a small plate and is securely fastened to an arm (19) connected by the intermediary of a slot (21₁) to an adjustable position guide, the position of the grippers (7) being adjustable perpendicularly to the alignment of the cans.

8. Installation in accordance with any one of the preceding claims, characterised in that each gripper is mounted fixed on the small plates, the position of the grippers being adjustable perpendicularly to the alignment of the cans.

## Patentansprüche

1. Einrichtung zum Anbringen von hüllsenförmigen Etiketten auf Gegenständen wie Kanistern, mit einem Maschinengestell (1), welches mit einem Tisch (4) zur Unterstützung der Kanister in der Anbringposition der Hülsen versehen ist, mit einem Former (25,23,27,30,31) zur Formung der Hülsen, mit Zangen (7) zur Streckung der geformten Hülsen und zur Anbringung derselben auf den Kanistern, dadurch gekennzeichnet, daß der Former auf einer Traganordnung (44) angebracht ist, die ihrerseits über Mittel (46,47,48) an dem Maschinengestell (1) abgestützt ist, die eine Drehung der Traganordnung um eine vertikale, mit der Achse (X-X) des Tisches (4) und der Achse des Formers zusammenfallende Achse erlaubt.

2. Einrichtung nach Anspruch 1, dadurch gekennzeichnet, daß der Former an der Traganordnung (44) vertikal beweglich ist.

3. Einrichtung nach einem der vorangehenden Ansprüche, dadurch gekennzeichnet, daß der Former der Hülse durch eine Platte (25) gebildet ist, die auf jeder ihrer Seiten mit mindestens einem Paar von frei drehbaren Rol-len (26,27,28,29) versehen ist und zwischen parallelen Wellen aufgehängt ist, die zwischen den beiden Rollen jedes Paars angeordnet sind und von denen jeweils eine angetrieben ist, wobei die Platte an ihrem unteren Ende unterhalb des Rollenpaars mit einem kreisförmigen Ansatz versehen ist.

4. Einrichtung nach Anspruch 2, dadurch gekennzeichnet, daß der kreisförmige Ansatz einen kegelstumpfförmigen Teil (41) mit kreisförmiger Grundfläche bildet, der mit seitlichen Öffnungen (42) für den Durchtritt der Streckzangen (7) für die Hülse versehen ist.

5. Einrichtung nach Anspruch 1, dadurch gekennzeichnet, daß die Streckzangen für die Hülse zwei Zangenpaare umfassen, die auf gegenläufig parallel zu der geradlinigen Aufreihung der Kanister beweglichen Platinen (11,12) angebracht sind.

6. Einrichtung nach Anspruch 5, dadurch gekennzeichnet, daß die Platinen (11,12) durch eine Kolben/Zylindereinheit (14) über einen Arm (16) verlagerbar sind, der an einer Abstützung (15) schwenkbar gelagert ist, deren Position zur Einstellung der Position der Streckzangenpaare verstellbar ist.

7. Einrichtung nach einem der vorangehenden Ansprüche, dadurch gekennzeichnet, daß jede Streckzange schwenkbar auf einer Platine gelagert und mit einem Arm (19) fest verbunden ist, der über einen Schlitz (21₁) mit einem Führungsglied für die einstellbare Position verbunden ist, wobei die Position der Zangen (7) senkrecht zur Aufreihung der Kanister einstellbar ist.

8. Einrichtung nach einem der vorangehenden Ansprüche, dadurch gekennzeichnet, daß jede Zange auf den Platinen fest angebracht und ihre Position senkrecht zur Aufreihung der Kanister verstellbar ist.
